# EUROPEAN PATENT APPLICATION

(11) **EP 2 040 508 A1**
(43) Date of publication of application: **25.03.2009**
(21) Application number: 07018740.6
(22) Date of filing: 24.09.2007
(51) Int. Cl.: H04W 84/00

(54) **Method, apparatuses and program product for controlling IMS services when user is roaming in CS domain**

(71) Applicant: Nokia Siemens Networks Oy, 02610 Espoo (FI)
(72) Inventor: Wiehe, Ulrich, 36251 Bad Hersfeld (DE); Öttl, Martin, 82362 Weilheim (DE)
(74) Representative: Eisenführ, Speiser & Partner

(57) **Abstract**

The present invention relates to a method, network element, network arrangement, system and computer program product for controlling services of an internet protocol multimedia subsystem (IMS) 5 in a network when a user equipment (UE) 1 is roaming in the circuit switched (CS) domain 3 without having internet protocol (IP) connectivity. In this case, the service control must rely on CS transmission techniques such as unstructured supplementary service data (USSD). The present invention enables to improve a routing of USSD messages between the UE 1 and an IMS circuit switched control function (ICCF) 11.

## Description

### FIELD OF THE INVENTION

The present invention relates to a method, network element, network arrangement, system and computer program product for controlling services in a network such as - but not restricted to - an internet protocol (IP) multimedia network.

### BACKGROUND OF THE INVENTION

In recent years, communication networks with packet-based infrastructures have been developed. Such networks require a reduced core network complexity and maintenance. When shifting the core network infrastructure from the circuit switched (CS) domain to a consolidated common IP multimedia subsystem (IMS) infrastructure, there will be a need to enable a consistent provision of services to subscribers over a variety of accesses, including CS domain and packet switched (PS) domain accesses.

In the 3rd Generation Partnership Project (3GPP) Release 8 (Rel-8), a study has started on how to provide an IMS service via a CS access. This study is covered within 3GPP under the topic IMS centralized service control. A technical report TR 23.892 summarizes the results of the study.

IMS service provisioning relies on IP access, which is at least for a Voice over IP (VoIP) data stream not always available, e.g. when roaming in global system for mobile communications (GSM) access systems. The study tries to overcome this limitation by studying how to re-use a CS access, i.e. circuit switched links, to carry a voice data stream, but still allow the IMS to control sessions and perform a service provisioning for IMS centralized services (ICS) users.

This leads to a need to have an extra signaling connection between a terminal and the IMS, transferred by the CS domain. Thus, it is envisioned that a service signaling and a bearer setup signaling are separated. Within the discussion in 3GPP, the currently most preferred transport mechanism for carrying a service control signaling via a CS access is unstructured supplementary service data (USSD).

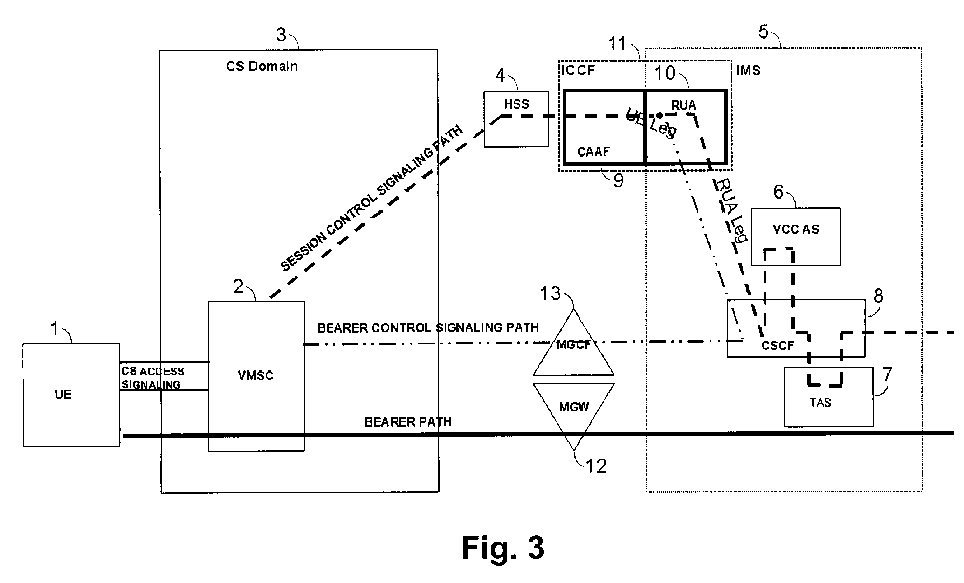

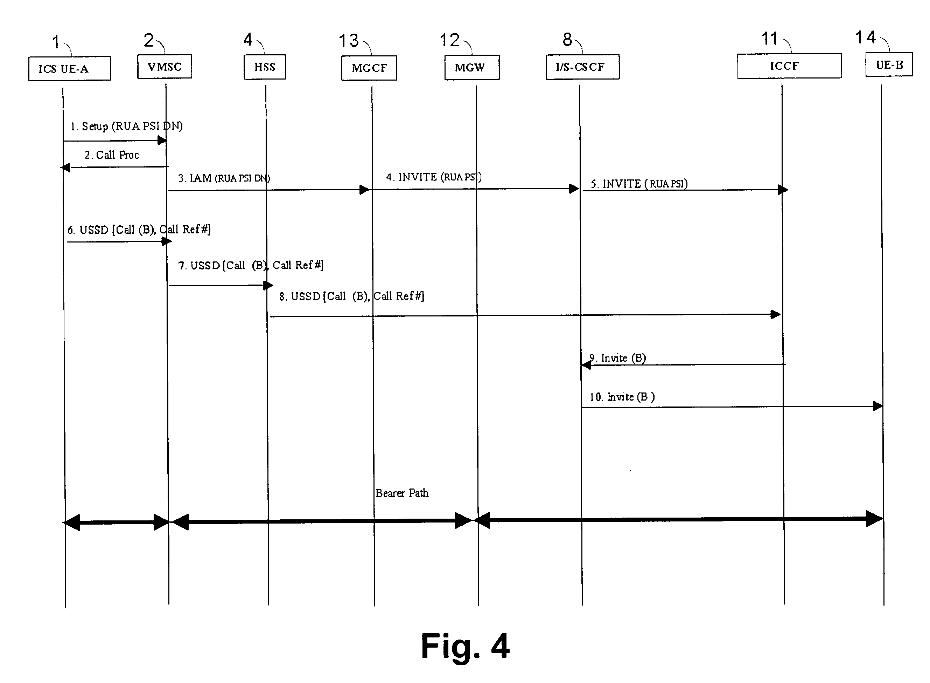

Fig. 3 shows a schematic block diagram illustrating signaling/bearer paths in a network environment when using a USSD transport with an application server (AS) approach for a remote user agent (RUA) as proposed in TR 23.892. The network environment depicted in Fig. 3 comprises a user equipment (UE) 1 (denoted as ICS UE-A 1 in Fig. 4), a visited mobile switching center (VMSC) 2 in the CS domain 3, a home location register (HLR) or home subscriber server (HSS) 4, and an IMS 5 including a voice call continuity (VCC) AS 6, a telephony application server (TAS) 7 and a call session control function (CSCF) 8 (comprising a serving CSCF (S-CSCF) and an interrogating CSCF (I-CSCF)). Further, there are a CS access adaptation function (CAAF) 9 and a RUA 10 constituting an IMS CS control function (ICCF) 11. In addition, a media gateway (MGW) 12 and a media gateway control function (MGCF) 13 are provided. The network environment also comprises a UE-B 14 depicted in Fig. 4 but not shown in Fig. 3.

The UE 1 establishes a bearer control signaling path with the RUA 10 by establishing a CS call towards the RUA 10. In parallel, it establishes a session control signaling path with the CAAF 9 and the RUA 10 using USSD. The CAAF 9 performs an adaptation when relaying the session control signaling to the RUA 10. The bearer control signaling and session control signaling stimuli are combined at the RUA 10 for presenting a session initiation protocol (SIP) user agent (UA) behavior on behalf of the UE 1 towards the IMS 5 in order to establish an IMS session.

Fig. 4 shows a schematic diagram illustrating an information flow in case of an ICS UE origination using a mobile initiated USSD transport for a call control. The following procedure is carried out in a network environment such as depicted in Fig. 3:
1. The ICS UE-A 1 (denoted as UE 1 in Fig. 3) sends a SETUP message to the VMSC 2 to establish a bearer leg. The SETUP message includes a RUA public service identity (PSI) destination network (DN) as a called party number. This will establish a CS domain bearer control signaling path with the ICCF 11.
2. The VMSC 2 responds with a call proceeding message and begins to set up the bearer control signaling path.
3. The VMSC 2 processes the SETUP message and sends an initial address message (IAM) to the MGCF 13. The SETUP message contains the RUA PSI DN. This is a standard VMSC procedure for a CS origination.
4. The MGCF 13 performs a setup of the MGW 12 and creates an INVITE message that is sent to the S-CSCF 8 that serves the ICCF 11. This may involve sending the INVITE message to the I-CSCF 8 first to locate the S-CSCF 8 and to translate the RUA PSI DN to a SIP uniform resource identifier (URI). This is a standard MGCF procedure for a public switched telephone network (PSTN) origination.
5. The S-CSCF 8 forwards the INVITE message to the RUA 10 of the ICCF 11.
6. The ICS UE-A 1 sends a USSD message to the VMSC 2. The USSD message includes a called party identification (Call (B)) and a call reference number (Call Ref #).
7. The VMSC 2 forwards the USSD message to the HSS 4.
8. The HSS 4 forwards the USSD message to the ICCF 11.
9. The CAAF 9 of the ICCF 11 performs an adaptation and relays information needed for a generation of a SIP INVITE message at the RUA 10 of the ICCF 11. The RUA 10 of the ICCF 11 acting as a back-to-back user agent (B2BUA) creates a SIP INVITE message with appropriate session description protocol (SDP) information and sends it to the S-CSCF 8. That is, a UE leg is terminated and a RUA leg is originated for presenting an IMS session towards another party B on behalf of the UE-A 1. The other party B is represented by the UE-B 14.
10. The S-CSCF 8 routes the INVITE message to the correct destination for the party B based on a standard IMS originated session processing at the S-CSCF 8.

As described above, a session control signaling channel is set up between the ICS UE-A 1 and the ICCF 11 equaling the combined CAAF 9 and RUA 10 function. This session control signaling channel is realized by means of a "mobile initiated USSD signaling" represented by the steps 6, 7, and 8 in Fig. 4.

The use of USSD for the ICS call control signaling such as described above leads to a quite heavy USSD load in the network. USSD exchanges between the UE and the IMS are envisaged for:
- Initial registration and de-registration
- Periodic re-registration
- Originating calls
- Receiving incoming calls
- Domain transfer procedures (handover between CS and IMS)
- Mid-call handling, such as call hold, resume, etc.
- Uniquely identifying every call by assigning a session identifier (ID)
- Exchanging caller and callee IDs, e.g. a SIP URI

In current networks the use of USSD is quite rare. The most frequent case is to query a pre-paid account, which may happen once a day or even less per user. The introduction of ICS would change the amount of USSD traffic quite dramatically. A heavy USSD load such as mentioned above would result from the introduction of ICS. It can be assumed that current mechanisms for the routing of USSD messages are required to be optimized, e.g. by bypassing the HLR/HSS whenever possible.

The above described mechanism for setting up a session control signaling channel does not provide an efficient routing of USSD messages. This is due to the following reasons:
- The session control signaling channel transits the HSS 4 and therefore adds a processing load to the HSS 4.
- The routing via the HSS 4 delays the transfer of USSD messages, which may cause a delayed call setup as a consequence, especially during busy hour periods.
- A configuration is needed to guarantee that the USSD message in the step 8 of Fig. 4 is routed to the same ICCF 11 as the SIP INVITE message in the step 5 of Fig. 4.
- A correlation for the messages of the steps 5 and 8 in the ICCF 11 is required (Call Ref #).

Thus, bypassing the HLR/HSS 4 and optimizing the routing between the UE 1 and the IMS 5 would be beneficial.

### SUMMARY OF THE INVENTION

It is an object of the present invention to provide a method, network element, network arrangement, system and computer program product for controlling services in a network, by means of which a routing between a UE and an IMS can be improved.

This object can be achieved by a method for controlling services in a network, the method comprising: establishing a network initiated service data dialogue; and transmitting information identifying a receiving end to a network element that has initiated the service data dialogue.

The service data dialogue may be established between the network element and a transmitting end configured to transmit the information identifying a receiving end. A control channel can be set up between the network element and a transmitting end configured to transmit the information identifying a receiving end, wherein the service data dialogue may be performed via the control channel. The control channel can be set up either via a network unit in the circuit switched domain or directly between the network element and the transmitting end. The control channel may be a session control signaling channel or an internet protocol multimedia subsystem circuit switched control channel.

In the above described method the information identifying a receiving end can be encoded in an internet protocol multimedia subsystem circuit switched control protocol. The method may further comprise: interrogating a current address of a transmitting end configured to transmit the information identifying a receiving end; and sending the current address of the transmitting end to the network element. The method can also further comprise: establishing a bearer control signaling path. The bearer control signaling path may be established between a transmitting end configured to transmit the information identifying a receiving end and the network element.

In the above described method the service data dialogue can be an unstructured supplementary service data dialogue.

The above object may also be achieved by a computer program product for a computer, comprising software code portions for performing the steps of the above described method when the product is run on the computer.

Further, the object can be achieved by a network element for controlling services in a network, the network element configured to: establish a network initiated service data dialogue with a transmitting end; and receive information identifying a receiving end from the transmitting end.

The network element may be further configured to: set up a control channel between the network element and the transmitting end; and perform the service data dialogue via the control channel. The network element can also be further configured to set up the control channel either via a network unit in the circuit switched domain or directly between the network element and the transmitting end. The control channel may be a session control signaling channel or an internet protocol multimedia subsystem circuit switched control channel.

In the above described network element the information identifying a receiving end can be encoded in an internet protocol multimedia subsystem circuit switched control protocol. The network element may be further configured to: interrogate a current address of the transmitting end; and receive the current address of the transmitting end.

In the above described network element the service data dialogue can be an unstructured supplementary service data dialogue.

The above object may also achieved by a network arrangement comprising: at least one network element as described above; and at least one further network element configured to perform internet protocol based communications. The further network element can be an internet protocol multimedia subsystem.

Further, the above object may be achieved by a user equipment configured to: receive service data from a network element as described above; and transmit information identifying a receiving end to the network element. The user equipment can be a terminal device. The terminal device may be a mobile phone.

In addition, the above object can be achieved by a system comprising: at least one network arrangement as described above; and at least one user equipment as described above. The system may be a telecommunication system.

With the above described method, network element, network arrangement, system and computer program product for controlling services in a network a routing between a UE and an IMS can be improved as discussed in more detail below.

### BRIEF DESCRIPTION OF THE DRAWINGS

In the following, the present invention will be described based on a preferred embodiment with reference to the accompanying drawings, in which:

Fig. 1 shows a schematic block diagram illustrating signaling/bearer paths in a network environment according to the preferred embodiment;

Fig. 2 shows a schematic diagram illustrating an information flow in case of an ICS UE origination using a network initiated USSD transport for a call control according to the preferred embodiment;

Fig. 3 shows a schematic block diagram illustrating signaling/bearer paths in a network environment when using a USSD transport with an AS approach for a RUA; and

Fig. 4 shows a schematic diagram illustrating an information flow in case of an ICS UE origination using a mobile initiated USSD transport for a call control.

### DESCRIPTION OF THE PREFERRED EMBODIMENT

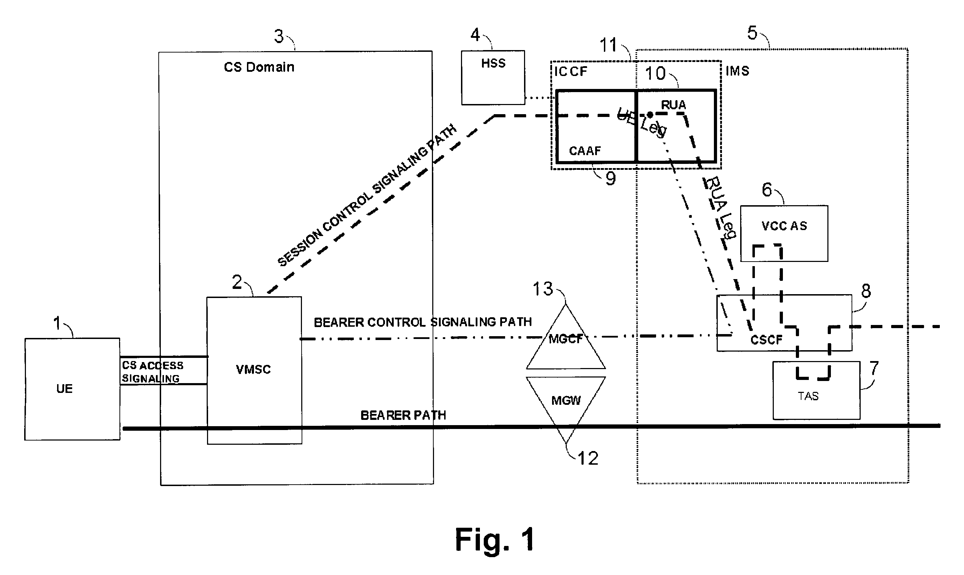

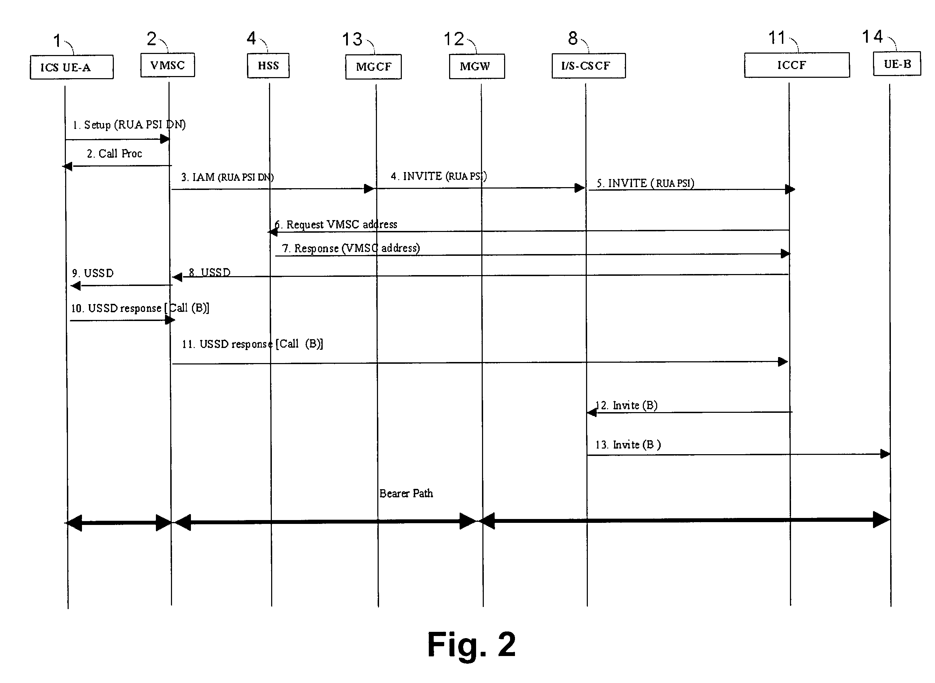

The preferred embodiment of the present invention will now be described with reference to Fig. 1 showing a schematic block diagram illustrating signaling/bearer paths in a network environment and Fig. 2 showing a schematic diagram illustrating an information flow in case of an ICS UE origination using a network initiated USSD transport for a call control. Items in Fig. 1 and Fig. 2 corresponding to those depicted in Fig. 3 and Fig. 4 are provided with the same reference signs.

The network environment depicted in Fig. 1 comprises a transmitting end such as e.g. a UE 1 (denoted as ICS UE-A 1 in Fig. 2), a network unit such as e.g. a VMSC 2 in the CS domain 3, a HLR or HSS 4, and an IMS 5 including a VCC AS 6, a TAS 7 and a CSCF 8 (comprising a S-CSCF and an I-CSCF). Further, there are a CAAF 9 and a RUA 10 constituting a network element such as e.g. an ICCF 11. In addition, a MGW 12 and a MGCF 13 are provided. The network environment also comprises a receiving end such as e.g. a UE-B 14 depicted in Fig. 2 but not shown in Fig. 1.

The network environment can e.g. be a fixed or wireless network system. For example, it may be a communication system like a telecommunication system such as e.g. the PSTN or a mobile radio network system.

Each of the UE 1 and the UE-B 14 can e.g. be a stationary or portable terminal device. For example, it may be a telecommunication device such as e.g. a telephone, a mobile station or a mobile phone. A modem, a data card etc. for enabling access to a telecommunication network such as a mobile radio network as well as a stationary computer or notebook provided with such modem, data card etc. or a built-in capability of accessing a telecommunication network such as a mobile radio network may be other examples of the UE 1 and the UE-B 14. In general, another network environment and other items as those depicted in Fig. 1 may be used. That is, the present invention is not restricted to the network environment and items shown in Fig. 1 but may be implemented with other network environments and items. The network environment may comply with the 3GPP standard, in particular the 3GPP Rel-8 specification.

A network arrangement may comprise the IMS 5 and a home network thereof (not shown in Fig. 1).

The UE 1 can establish a bearer control signaling path with the RUA 10 by establishing a CS call towards the RUA 10. It also can establish a session control signaling path with the CAAF 9 and the RUA 10 using e.g. USSD. The CAAF 9 may perform an adaptation when relaying the session control signaling to the RUA 10. The bearer control signaling and session control signaling stimuli may be combined at the RUA 10 for presenting a session initiation protocol (SIP) user agent (UA) behavior on behalf of the UE 1 towards the IMS 5 in order to establish an IMS session.

For an ICS UE origination using a mobile initiated USSD transport for a call control such as shown in Fig. 4, USSD messages are routed towards or via the HLR/HSS. But this is not required for ICS, because here USSD messages are exchanged transparently between the UE and the IMS without the need for interworking in the HLR/HSS.

Therefore, a procedure capable of improving the routing between the UE and the IMS is proposed. As illustrated in Fig. 2, the procedure can e.g. be performed as follows:
1. The ICS UE-A 1 (denoted as UE 1 in Fig. 1) sends a SETUP message to the VMSC 2 to establish a bearer leg. The SETUP message includes a RUA PSI DN as a called party number. This will establish a CS domain bearer control signaling path with the ICCF 11.
2. The VMSC 2 responds with a call proceeding message and begins to set up the bearer control signaling path.
3. The VMSC 2 processes the SETUP message and sends an IAM to the MGCF 13. The SETUP message contains the RUA PSI DN.
4. The MGCF 13 performs a setup of the MGW 12 and creates an INVITE message that is sent to the S-CSCF 8 that serves the ICCF 11. This may involve sending the INVITE message to the I-CSCF 8 first to locate the S-CSCF 8 and to translate the RUA PSI DN to a SIP URI.
5. The S-CSCF 8 forwards the INVITE message to the RUA 10 of the ICCF 11.
6. The ICCF 11 interrogates the ICS UE-A's current VMSC address from the HSS 4. When there are multiple USSD messages per UE, a VMSC address caching mechanism may be used.
7. The HSS 4 returns or sends the VMSC address to the ICCF 11.
8. The ICCF 11 sends a USSD message to the VMSC 2. A signaling gateway (not shown in the figures) may be used to convert an IP based message to a signaling system 7 (SS7) based message.
9. The VMSC 2 forwards the USSD message to the ICS UE-A 1.
10. The ICS UE-A 1 encodes in an IMS CS Control Protocol (ICCP) sufficient information (e.g. containing an address (SIP or Tel URI) of another party B represented by the UE-B 14) for the RUA 10 of the ICCF 11 to generate a SIP INVITE message initiating a session towards the other party B, to be sent in a USSD response message, and sends it towards the VMSC 2.
11. The VMSC 2 forwards the USSD response message to the RUA 10 of the ICCF 11 either directly or via the CAAF 9 of the ICCF 11. A signaling gateway (not shown in the figures) may be used to convert a SS7 based message to an IP based message. The USSD response message is routed to the ICCF 11 which sent the request, without the need for configuration. When the RUA 10 of the ICCF 11 has received both the USSD response message (steps 6 to 11) and the INVITE message (step 5), it has sufficient information to set up a session with the party B.
12. The CAAF 9 of the ICCF 11 performs an adaptation and relays information needed for a generation of a SIP INVITE message at the RUA 10 of the ICCF 11. The RUA 10 of the ICCF 11 acting as a B2BUA creates a SIP INVITE message with appropriate SDP information and sends it to the S-CSCF 8. That is, a UE leg is terminated and a RUA leg is originated for presenting an IMS session towards the other party B on behalf of the UE-A 1.
13. The S-CSCF 8 routes the INVITE message to the correct termination or destination for the party B based on an IMS originated session processing at the S-CSCF 8.
   The ICCF 11 may send a USSD message directly to the ICS UE-A 1, and the ICS UE-A 1 may send a USSD response message directly to the ICCF 11. In such a case the above step 9 may be omitted, and the above steps 10 and 11 may be combined while dispensing with the forwarding of the USSD response message from the VMSC 2 to the CAAF 9 of the ICCF 11.

The USSD response message sent to the ICCF 11 can include the address of the other party B represented by the UE-B 14 as a receiving end. That is, information identifying the receiving end may be transmitted to the ICCF 11.

All or part of the above described procedure can be implemented in a method, a network element, a network arrangement or a system. The steps of such method may be performed by software code portions of a computer program product for a computer when the product is run on the computer.

The above described procedure comprises an improved mechanism for the routing of USSD messages between ICS subscribers and the IMS. The ICCF 11 can establish a network initiated USSD dialogue with the ICS UE-A 1 as a transmitting end either directly or via the VMSC 2 as a network unit in the CS domain. That is, a control channel or path such as e.g. a session control signaling channel or path may be set up or established between the ICCF 11 and the ICS UE-A 1. The control channel can be an IMS CS control channel (ICCC) which may be established between the RUA 10 of the ICCF 11 and the ICS UE-A 1 either directly or via the CAAF 9 of the ICCF 11.

Thus, it is proposed to use a network initiated USSD signaling instead of the mobile initiated USSD signaling as previously described in connection with Fig. 4.

By using the above described network initiated USSD signaling, USSD messages can be exchanged directly between the ICCF 11 and the VMSC 2 or the ICS UE-A 1 (after the retrieval of the VMSC address from the HSS 4) without transiting via the HSS 4 for the USSD dialogue. That is, the session control signaling channel between the ICCF 11 and the ICS UE-A 1 does not have to transit the HSS 4 (as shown in Fig. 1), and no routing via the HSS 4 is needed. Thus, no additional processing load is imposed to the HSS 4. Further, transfers of USSD messages are not delayed by a routing via the HSS 4. As a result, a delayed call setup due to delayed transfers of USSD messages can be avoided. This may even apply during the busy hour periods.

With the above described network initiated USSD signaling, no additional administration is required to ensure that the session control signaling channel is established with the correct ICCF 11. Hence, no configuration is needed to guarantee that the USSD message in the step 11 of Fig. 2 is routed to the same ICCF 11 as the INVITE message in the step 5 of Fig. 2.

The above described network initiated USSD signaling enables a simplified correlation in the ICCF 11 for the messages in the steps 5 and 11 of Fig. 2 as compared with the correlation required for the messages in the steps 5 and 8 of Fig. 4.

In general, the above described procedure enables an improved routing between a UE and an IMS.

While the present invention has been illustrated and described in detail in the drawings and the foregoing description, such illustration and description are to be considered illustrative or exemplary and not restrictive. The invention is not limited to the preferred embodiment described above.

Variations to the disclosed embodiment can be understood and effected by those skilled in the art, from a study of the drawings, the disclosure and the appended claims. In the claims, the word "comprising" does not exclude other elements or steps, and the indefinite article "a" or "an" does not exclude a plurality of elements or steps. A single processor or other unit may fulfill the functions of several items recited in the claims. The mere fact that certain measures are recited in mutually different dependent claims does not indicate that a combination of these measures cannot be used. The order of items in a claim may be varied. A computer program may be stored/distributed on a suitable medium, such as an optical storage medium or a solid-state medium supplied together with or as part of other hardware, but may also be distributed in other forms, such as via the Internet or other wired or wireless telecommunication systems.

In summary, the present invention relates to a method, network element, network arrangement, system and computer program product for controlling services of an internet protocol multimedia subsystem (IMS) 5 in a network when a user equipment (UE) 1 is roaming in the circuit switched (CS) domain 3 without having internet protocol (IP) connectivity. In this case, the service control must rely on CS transmission techniques such as unstructured supplementary service data (USSD). The present invention enables to improve a routing of USSD messages between the UE 1 and an IMS circuit switched control function (ICCF) 11.

## Claims

1. A method for controlling services in a network, said method comprising:
- establishing a network initiated service data dialogue; and
- transmitting information identifying a receiving end to a network element that has initiated said service data dialogue.

2. A method according to claim 1, wherein said service data dialogue is established between said network element and a transmitting end configured to transmit said information identifying a receiving end.

3. A method according to claim 1 or claim 2, wherein
- a control channel is set up between said network element and a transmitting end configured to transmit said information identifying a receiving end, and
- said service data dialogue is performed via said control channel.

4. A method according to claim 3, wherein said control channel is set up via a network unit in the circuit switched domain.

5. A method according to claim 3, wherein said control channel is set up directly between said network element and said transmitting end.

6. A method according to any one of claims 3 to 5, wherein said control channel is a session control signaling channel.

7. A method according to any one of claims 3 to 6, wherein said control channel is an internet protocol multimedia subsystem circuit switched control channel.

8. A method according to any one of the preceding claims, wherein said information identifying a receiving end is encoded in an internet protocol multimedia subsystem circuit switched control protocol.

9. A method according to any one of the preceding claims, further comprising:
- interrogating a current address of a transmitting end configured to transmit said information identifying a receiving end; and
- sending said current address of said transmitting end to said network element.

10. A method according to any one of the preceding claims, further comprising:
- establishing a bearer control signaling path.

11. A method according to claim 10, wherein said bearer control signaling path is established between a transmitting end configured to transmit said information identifying a receiving end and said network element.

12. A method according to any one of the preceding claims, wherein said service data dialogue is an unstructured supplementary service data dialogue.

13. A computer program product for a computer, comprising software code portions for performing the steps of a method according to any one of the preceding claims when said product is run on said computer.

14. A network element for controlling services in a network, said network element configured to:
- establish a network initiated service data dialogue with a transmitting end; and
- receive information identifying a receiving end from said transmitting end.

15. A network element according to claim 14, wherein said network element is further configured to:
- set up a control channel between said network element and said transmitting end; and
- perform said service data dialogue via said control channel.

16. A network element according to claim 15, wherein said network element is further configured to set up said control channel via a network unit in the circuit switched domain.

17. A network element according to claim 15, wherein said network element is further configured to set up said control channel directly between said network element and said transmitting end.

18. A network element according to any one of claims 14 to 17, wherein said control channel is a session control signaling channel.

19. A network element according to any one of claims 14 to 18, wherein said control channel is an internet protocol multimedia subsystem circuit switched control channel.

20. A network element according to any one of claims 14 to 19, wherein said information identifying a receiving end is encoded in an internet protocol multimedia subsystem circuit switched control protocol.

21. A network element according to any one of claims 14 to 20, wherein said network element is further configured to:
- interrogate a current address of said transmitting end; and
- receive said current address of said transmitting end.

22. A network element according to any one of claims 14 to 21, wherein said service data dialogue is an unstructured supplementary service data dialogue.

23. A network arrangement comprising:
- at least one network element according to any one of claims 14 to 22; and
- at least one further network element configured to perform internet protocol based communications.

24. A network arrangement according to claim 23, wherein said further network element is an internet protocol multimedia subsystem.

25. A user equipment configured to:
- receive service data from a network element according to any one of claims 14 to 22; and
- transmit information identifying a receiving end to said network element.

26. A user equipment according to claim 25, wherein said user equipment is a terminal device.

27. A user equipment according to claim 26, wherein said terminal device is a mobile phone.

28. A system comprising:
- at least one network arrangement according to claim 23 or 24; and
- at least one user equipment according to any one of claims 25 to 27.

29. A system according to claim 28, wherein said system is a telecommunication system.
